# DEMANDE DE BREVET EUROPEEN

(11) **EP 0 550 310 A1**
(43) Date de publication de la demande: **07.07.1993**
(21) Numéro de dépôt: 92403462.2
(22) Date de dépôt: 18.12.1992
(51) Int. Cl.: B60R 25/02

(54) **Dispositif antivol pour véhicules automobiles**

(30) Priorité: 31.12.1991 FR 9116355
(71) Demandeur: Afriat, Madeleine, épouse Fauré, F-93700 Drancy (FR); Fauré, René Louis Michel, F-93700 Drancy (FR)
(72) Inventeur: Afriat, Madeleine, épouse Fauré, F-93700 Drancy (FR); Fauré, René Louis Michel, F-93700 Drancy (FR)
(74) Mandataire: Rataboul, Michel Charles

(57) **Abrégé**

Le dispositif antivol est destiné aux véhicules qui comprennent un mécanisme de direction composé d'une colonne et d'un élément de commande tel qu'un volant, un guidon et analogue. Il est du type selon lequel l'élément de commande (2) est monté pivotant sur la colonne de direction (A) selon un axe perpendiculaire à celui de ladite colonne afin de permettre le pivotement dudit élément de commande (2) vers une position dite "antivol" où il est inapte à son usage normal tout en étant maintenu solidaire de la colonne de direction (A), des moyens (2031-43) étant prévus pour le blocage de l'élément de commande (2) dans une position dite "de conduite" où il se trouve dans l'axe de la colonne de direction (A) et apte à son usage normal.

Il est caractérisé en ce que l'élément de commande (2) et la colonne de direction (A) sont solidaires de pièces articulées entre elles, les pièces (13 et 26) solidaires de la colonne de direction (A) comprenant un cache (25) qui dissimule l'extrémité de la colonne de direction (A) afin d'en interdire l'accès quand l'élément de commande (2) est en position antivol.

## Description

L'invention concerne la protection contre le vol de véhicules de tout type pourvu qu'il soit muni d'un dispositif de commande de direction : volant, guidon ou autre.

Parmi les divers moyens connus pour protéger les véhicules automobiles, il existe des dispositifs basés sur la neutralisation du volant qui consistent pour la plupart à désaccoupler le volant de la colonne de direction pour passer en phase antivol.

Dans le cas le plus simple, et de loin le moins pratique, le conducteur doit, dès lors qu'il souhaite protéger son véhicule, démonter le volant et l'emporter, ce qui suppose, bien sûr, un mécanisme simplifié de solidarisation du volant et de la colonne de direction.

Selon d'autres dispositifs et dans l'objectif d'améliorer leur mise en oeuvre d'un point de vue pratique, les opérations de désaccouplement et d'accouplement sont réalisées à l'aide de pièces intermédiaires plus ou moins complexes insérées, selon les cas, soit entre la colonne de direction et le volant, soit entre les deux serpents de colonne de direction lorsque celle-ci est réalisée en deux parties dont l'une supporte le volant. Dans ce cas, le conducteur doit emporter la pièce de liaison permettant la solidarisation du volant à la colonne de direction, ce qui autorise la conduite du véhicule.

On connaît également par la demande de brevet FR-A-2 658 769, un dispositif basé sur un principe différent puisque, à l'inverse, le volant reste toujours solidaire de la colonne de direction. Le passage en situation de protection consiste à faire pivoter le volant autour d'un axe parallèle à la colonne de direction. A cette fin, le volant et la colonne de direction sont munis chacun d'une bride reliées l'une à l'autre par un goujon formant un axe excentré par rapport à l'axe de la colonne de direction. Le volant est bloqué en position de conduite par un organe amovible comportant des chevilles et/ou évidements qui sont destinés à coopérer respectivement avec des évidements et/ou chevilles situés sur les brides. Selon ce dispositif, le conducteur doit enlever l'organe amovible bloquant le volant pour passer en situation d'antivol, organe amovible qu'il doit, bien entendu, ne pas laisser dans le véhicule. Par suite, le volant dans sa position antivol pivote librement autour du goujon ce qui, par conséquent, empêche toute personne non autorisée de conduire le véhicule.

On peut constater que ces dispositifs présentent tous un inconvénient pratique majeur du fait que le conducteur est obligé d'emporter avec lui une pièce relativement encombrante pour assurer la protection de son véhicule.

En outre, il n'y a pas d'impact psychologique dissuasif associé à ces mécanismes de protection, même dans le cas le plus perfectionné du dispositif à axe excentré parallèle à la colonne de direction décrit dans la demande de brevet FR-A-2 658 769. Par suite, le voleur n'est en aucun cas détourné de son intention de pénétrer dans le véhicule pour le voler et, lorsqu'il s'y est introduit, il lui est alors possible de resolidariser le volant et la colonne de direction par des moyens de fortune quelconques pouvant maintenir les deux brides en position de conduite.

On connaît aussi :
- Le document Le document FR-A-628.979 qui date d'une époque où la colonne de direction des véhicules était fréquemment verticale et le volant horizontal, ce dernier placé assez haut et, surtout, assez loin du siège du conducteur. En outre, la planche de bord de ces véhicules anciens était tout-à-fait simpliste, de sorte que la simple observation de la figure 2 du dessin de ce document montre que le volant en position verticale n'empêche pas radicalement la conduite du véhicule car il se présente alors à la manière des commandes d'un avion ou comme une roue de gouvernail qu'il suffit de déplacer vers la droite ou vers la gauche, selon un cercle virtuel horizontal (centré sur l'axe de la colonne de direction) pour obtenir la commande des roues.
- Le document DE-C-903.422 décrivant des moyens qui semblent bien naïfs, même pour 1952, époque à laquelle il a été déposé.

En effet, les organes de verrouillage 5-6 sont extrêmement vulnérables et fragi les et ne sauraient résister à de puissants moyens modernes de fracture et/ou de perçage.

En outre, comme le document FR-A-628.979, la colonne de direction est verticale, le volant horizontal et la planche de bord n'est pas plus évoquée que dans ce brevet.
- Le document DE-A-3.725.908, qui, en revanche, fait intervenir une planche de bord de type moderne pour bloquer le volant en position antivol, c'est-à-dire après avoir été relevé vers le haut, puis placé sous une visière de la planche de bord rabattue sur lui.

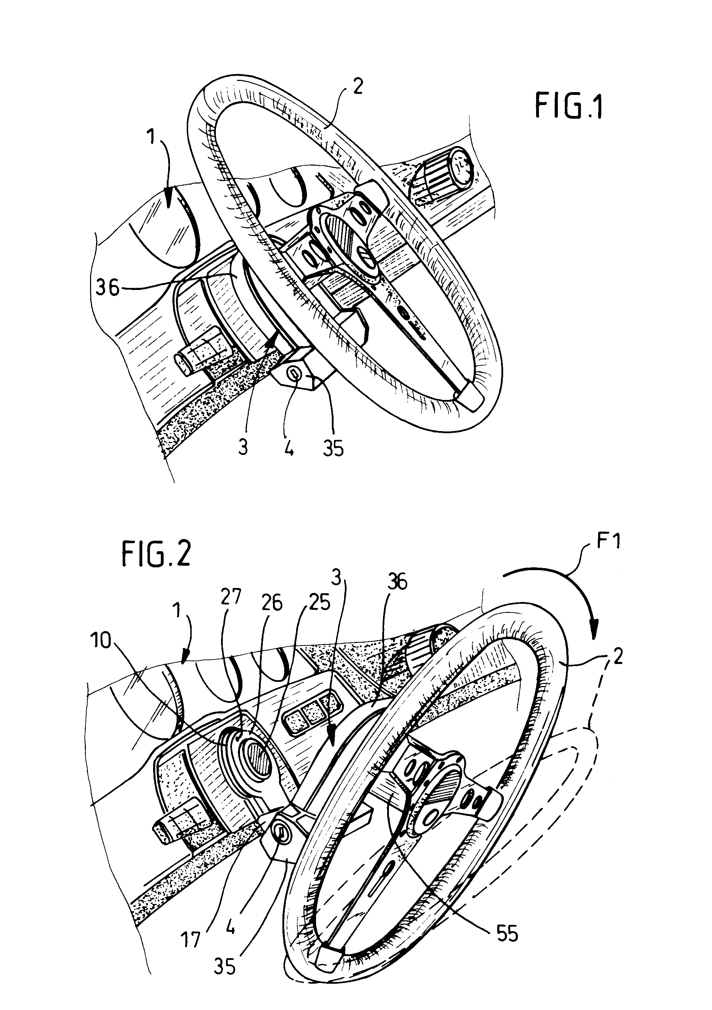

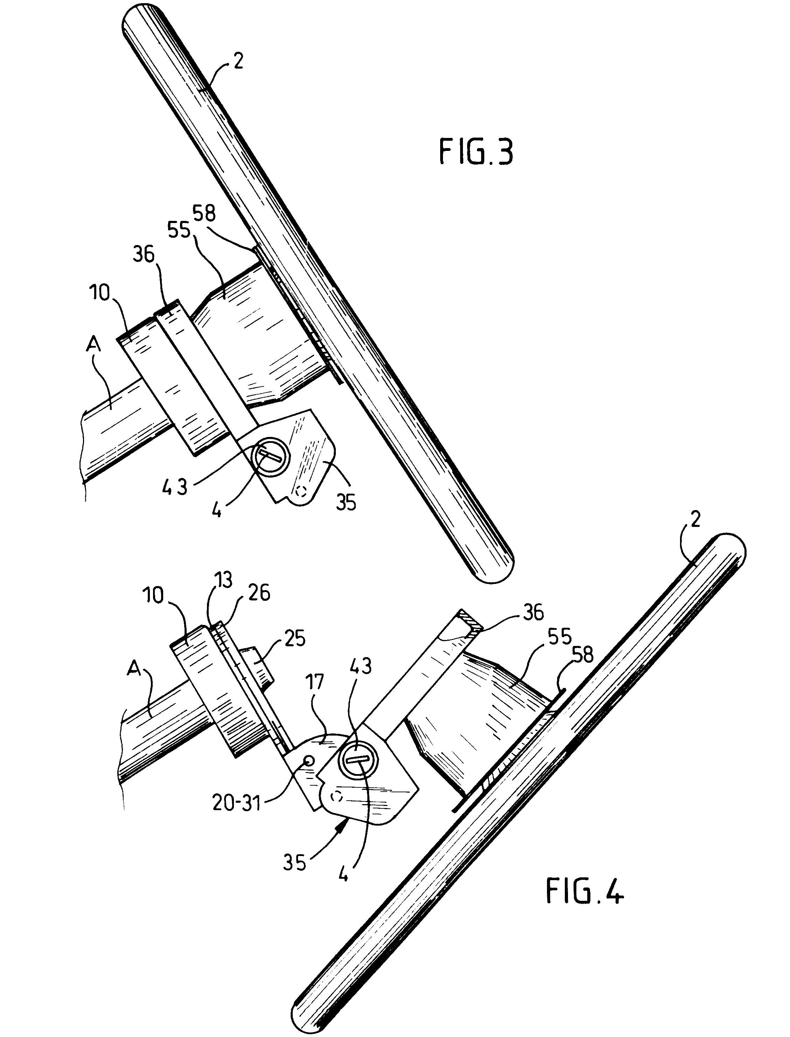

Aucune indication n'est donnée ni dans la description ni sur les dessins quant aux moyens permettant d'articuler ce qui semble être, sur les figures 2 et 3, deux tronçons de la colonne de direction.

A plus forte raison n'est-il rien indiqué quant à d'éventuels moyens permettant de s'opposer à une cassure brutale du tronçon 43 grâce à laquelle il serait facile de retirer le volant en vue de le remplacer par un autre.

De toutes façons, aucun des trois documents cités ne fait allusion à une protection particulière de la colonne de direction devenue accessible quand le volant est en position antivol.

La présente invention prévoit de rendre aussi inviolable que possible un dispositif antivol. Il faut donc, en particulier, que des moyens soient prévus pour que les organes mécaniques qui deviennent accessibles quand le volant est en position antivol soient protégés au mieux.

Or, aucun des documents cités ne prévoit de tels moyens, soit que les déposants n'aient même pas eu conscience du problème, soit qu'il n'en aient pas trouvé de solution.

La présente invention constitue une autre solution au problème de la protection contre le vol de véhicules automobiles et a pour objectif de procurer parallèlement à une grande efficacité et facilité de mise en oeuvre, un effet dissuasif important afin d'éviter que des voleurs ne fracturent inutilement le véhicule puisque de toute manière ils ne pourront pas commander la direction.

A cette fin, l'invention a pour objet un dispositif antivol pour les véhicules qui comprennent un mécanisme de direction composé d'une colonne et d'un élément de commande tel qu'un volant, un guidon et analogue, du type selon lequel l'élément de commande est monté pivotant sur la colonne de direction selon un axe perpendiculaire à celui de ladite colonne afin de permettre le pivotement dudit élément de commande vers une position dite "antivol" où il est inapte à son usage normal tout en étant maintenu solidaire de la colonne de direction, des moyens étant prévus pour le blocage de l'élément de commande dans une position dite "de conduite" où il se trouve dans l'axe de la colonne de direction et apte à son usage normal, caractérisé en ce que l'élément de commande et la colonne de direction sont solidaires de pièces articulées entre elles, les pièces solidaires de la colonne de direction comprenant un cache qui dissimule l'extrémité de la colonne de direction afin d'en interdire l'accès quand l'élément de commande est en position antivol.

Selon d'autres caractéristiques de l'invention :
- le cache est assujetti et immobilisé en position par des moyens inaccessibles lorsque l'élément de commande est en position antivol;
- un point de cassure privilégiée est prévu sur la pièce comprenant le cache dans une zone telle que l'extrémité de la colonne de direction soit inaccessible même après cassure audit point;
- l'élément de commande est assujetti au dispositif par un moyeu rigide mais susceptible de se déformer en cas de choc axial;
- le dispositif comporte des moyens de blocage et de préférence des moyens de verrouillage de l'élément de commande dans la position antivol;
- le dispositif comprend des moyens de verrouillage qui consistent en une serrure commandée par une clef amovible;
- la distance angulaire entre la position de conduite et la position antivol de l'élément de commande est suffisamment importante pour qu'il bute nécessairement contre un élément fixe de la cabine du véhicule et/ou le conducteur lorsque ledit élément de commande est manipulé alors qu'il est verrouillé en position antivol;
- le dispositif comprend une pièce qui doit être fixée à l'extrémité de la colonne de direction, à la place de l'élément de commande d'origine et qui comporte un support traversé d'au moins un passage perpendiculaire à l'axe de la colonne de direction pour recevoir une pièce montée pivotante et présentant des moyens de fixation identiques à ceux de la pièce afin de recevoir un élément de commande qui se substitue à l'élément de commande d'origine;
- le support est traversé de deux passages parallèles, l'un devant recevoir un axe de pivotement et l'autre devant recevoir un pène appartenant à une serrure, afin de bloquer et de verrouiller en position de conduite l'élément de commande et les pièces qui en sont solidaires;
- le support est en outre traversé d'un troisième passage parallèle aux deux précédents et devant recevoir un pène appartenant à une serrure, afin de bloquer et de verrouiller en position antivol l'élément de commande et les pièces qui en sont solidaires;
- le pène est lui-même monté mobile afin de pouvoir être mis en regard, sélectivement, du passage pour le blocage de l'élément de commande en position de conduite ou du passage pour le blocage de l'élément de commande en position antivol;
- le support et la partie pivotante sont munis d'au moins un passage destiné à recevoir un fil d'alimentation électrique, celui-ci devant contourner par l'extérieur l'axe de pivotement et devant être inaccessible en position antivol;
- le dispositif comprend d'une part, un bouton-poussoir situé sur la partie pivotante dans l'axe du pène et destiné à agir sur une tige également située dans l'axe du pène et dont une partie d'extrémité la plus proche du pène possède un diamètre inférieur à celui dudit pène, le bouton-poussoir étant rappelé dans sa position par un ressort coaxial à la tige et d'autre part, une lumière sensiblement en arc de cercle centré sur l'axe de pivotement pratiquée entre les passages du support et débouchant dans lesdits passages, le diamètre de ladite lumière étant adapté à celui de la partie d'extrémité de la tige;
- une butée est prévue pour le pène de la serrure;

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en perspective montrant un poste de conduite d'un véhicule équipé selon l'invention d'un dispositif de sécurité, le volant étant dans sa position normale de conduite.

La figure 2 est une vue schématique en perspective correspondant à celle de la figure 1, le volant étant représenté dans une position intermédiaire entre la position de conduite et une position antivol de basculement complet, évoquée par un tracé en pointillés.

La figure 3 est une vue schématique de profil du dispositif de la figure 1.

La figure 4 est une vue schématique de profil du dispositif de la figure 2.

La figure 5 est une vue schématique en perspective éclatée d'un mode de réalisation du dispositif conforme à l'invention.

La figure 6 est une vue schématique partielle illustrant une variante de réalisation du dispositif conforme à l'invention selon laquelle le dispositif, représenté en position de conduite, comprend des organes de sécurité.

La figure 7 est une vue schématique partielle du dipositif de la figure 8 dans une position intermédiaire entre la position de conduite et une position antivol de basculement complet.

La figure 8 est une vue schématique faite en coupe selon la ligne VIII-VIII de la figure 6.

La figure 9 est une vue schématique partielle en coupe de profil d'une autre variante de réalisation du dispositif selon l'invention en position de conduite, montrant le passage d'une alimentation électrique pour des commandes situées sur le volant.

En se reportant à la figure 1, on voit un poste de conduite de véhicule équipé selon l'invention et l'on voit un tableau de bord 1 muni de cadrans, boutons de commande et accessoires divers bien connus et non référencés, devant lequel se trouve un volant habituel 2 en position normale de conduite.

Le volant 2 est placé devant une sorte de boîtier 3 qui paraît être fixé au tableau de bord 1 et qui présente sur l'un de ses côtés une entrée de serrure 4 pour une clef (non représentée) évoquant les antivols classiques manoeuvrés par une clef et agissant par blocage de la direction.

En fait, la manoeuvre d'une clef introduite dans l'entrée de serrure 4 a pour effet d'autoriser le pivotement du volant 2 selon la flêche F1 de la figure 2 afin qu'il passe de la position de conduite de la figure 1 à une position dite "antivol" représentée en traits pointillés, la position représentée étant intermédiaire entre ces deux positions extrêmes.

Lorsque l'usager légitime de la voiture laisse celle-ci en stationnement, il actionne la clef et met le volant 2 en position antivol et l'on comprend qu'un éventuel voleur est rapidement dissuadé de pénétrer dans la voiture pour la voler étant donné la position anormale du volant 2 qui montre à l'évidence qu'il n'est pas possible de conduire la voiture, à supposer que l'on puisse y pénétrer et faire fonctionner le moteur.

Lorsque l'usager légitime revient à sa voiture, il remet le volant en position de conduite et l'y verrouille en actionnant la clef dans l'entrée de serrure 4.

Les figures 3 à 5 montrent un exemple de réalisation d'une structure permettant le fonctionnement général que l'on vient de décrire.

Cette structure comprend une embase 10 solidaire de la colonne de direction A et présentant six trous taraudés 12 disposés à 60° les uns des autres et destinés à recevoir des vis pour la fixation d'un moyeu portant le volant. Il s'agit d'un exemple parmi beaucoup d'autres possibles car il existe, en France seulement, près de trois cents systèmes différents.

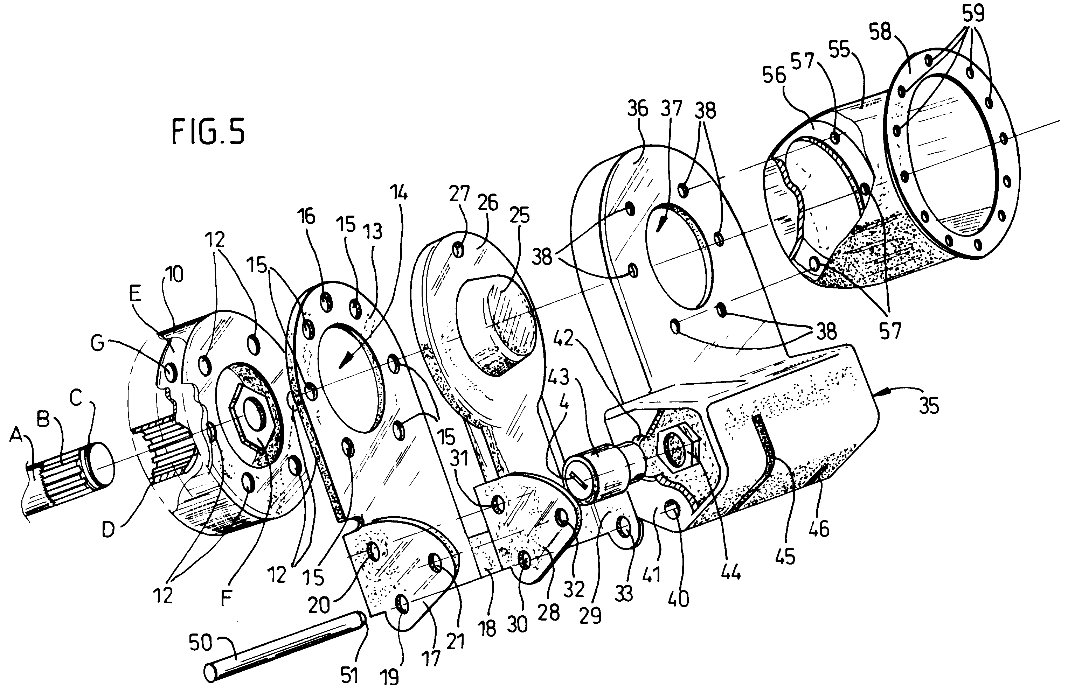

On rappelle que beaucoup de véhicules ne sont pas équipés avec leur volant d'origine mais avec un volant dit de "seconde monte". Dans ce cas, le moyeu supportant le volant choisi est rendu solidaire de la colonne de direction par un ensemble de pièces d'adaptation visible sur la figure 5. Selon cette forme de montage, la colonne de direction A présente une zone B munie de cannelures sur sa surface externe et une extrémité C filetée. On prévoit par ailleurs, un manchon D solidaire d'une couronne E destinée à recevoir un moyeu 55 devant supporter le volant 2. Ce manchon D est muni de cannelures sur sa surface interne et est rendu solidaire en rotation de la colonne de direction A en engageant les cannelures respectives de ces deux pièces les unes dans les autres. Puis, lorsque le manchon D est ainsi adapté sur la colonne de direction A, on visse un écrou F sur l'extrémité filétée C de celle-ci, au travers du passage central de la couronne E, pour assurer la solidarisation axiale du manchon D avec la colonne de direction A. On pourrait fixer le moyeu 55 sur la couronne E mais on préfère, pour améliorer la sécurité du montage, dissimuler l'ensemble des pièces d'adaptation à l'aide d'un cache 10 qui vient coiffer la couronne E, celle-ci étant munie de trous G alignés avec chacun des trous 12 du cache 10. Le cache 10 constitue par ailleurs l'embase destinée à recevoir le moyeu 55 supportant le volant 2, ce moyeu 55 étant également muni de trous 57 alignés avec chacun des trous 12 du cache 10. Le volant 2 est finalement solidarisé à la colonne de direction A par assemblage du moyeu 55, de l'embase 10 et de la couronne E au moyen de vis dans chacun des trous 57, 12 et G alignés.

Selon l'invention, dans le cas d'un montage sur une voiture existante munie d'un volant qui n'est pas le volant d'origine, on retire donc le moyeu 55 et le volant pour faire apparaître l'embase 10 et l'écrou F vissé, en son centre sur l'extrémité filetée C de la colonne de direction A. S'il s'agit d'un véhicule équipé de son volant d'origine, il faut alors prévoir cette embase 10.

L'embase 10 reçoit une pièce 13 traversée d'un passage central 14 permettant le logement de l'extrémité dépassante C et de l'écrou F, et présentant six trous lisses 15 pour sa fixation à l'embase 10 au moyen de vis en prise avec les trous taraudés 12.

La pièce 13 présente également un trou taraudé 16 placé à sa partie supérieure et dont l'utilité sera précisée plus loin.

A sa partie inférieure, la pièce 13 possède deux flasques parallèles 17 et 18. Le flasque 17 est traversé de trois trous 19, 20 et 21. Les deux trous 20 et 21 sont situés sur un arc de cercle virtuel centré sur le trou 19. Le flasque 18 est traversé d'un seul trou (non visible sur le dessin) correspondant au trou 19.

Lorsque la pièce 13 est mise en place, l'extrémité C et l'écrou F sont accessibles et pourraient être utilisés par un voleur, comme on l'expliquera plus loin. Aussi, faut-il les dissimuler et, pour cela, on prévoit un cache constitué par un logement 25 destiné à coiffer l'extrémité C et son écrou F, ce cache étant venu d'une seule pièce avec une pièce robuste ( par exemple en acier) 26, qui présente à sa partie supérieure un trou lisse 27 et à sa partie inférieure deux flasques parallèles 28 et 29 dont l'écartement est tel que, compte tenu de l'épaisseur de la matière dont ils sont faits, il puissent se placer avec un léger jeu, contre la face interne des flasques 17 et 18.

Le flasque 28 est traversé de trois trous 30, 31 et 32 devant se placer en regard des trous 19, 20 et 21. Le flasque 29 est traversé d'un seul trou 33 aligné avec les trous 30 et 19 et avec le trou du flasque 18 non visible sur le dessin.

La partie de structure qui vient d'être décrite constitue la partie fixe du dispositif et est visible à l'état monté sur les figure 2 et 4.

Elle reçoit une partie mobile qui comprend un boîtier 35 venu en une seule pièce avec une embase 36 qui est traversée d'un passage central 37 analogue au passage 14 de la pièce 13 mais devant laisser passage au logement 25.

Autour du passage central 37, se trouvent six trous taraudés 38 disposés de la même manière exactement que ceux 12 de la pièce 10, si bien que l'on reconstitue ici en quelque sorte la partie utile de l'embase 10.

Le boîtier 35 présente deux trous prévus dans ses faces latérales et alignés avec les trous 19, 30, 33 et avec le trou non visible du flasque 18 mais seul le trou 40 de la face latérale 41 est visible sur le dessin.

En outre, la face latérale 41 est traversée d'un trou de plus grand diamètre 42 dans lequel se trouve une serrure 43 portant l'entrée 4 et immobilisée par un écrou 44 vissé sur un pas de vis de la serrure 43, ainsi que cela est connu en soi, et serré contre le côté interne de la face latérale 41.

Le boîtier 35 présente d'une part, deux cloisons internes (non représentées) parallèles aux flasques 17 et 28 et déterminant une fente 45 et d'autre part, deux autres cloisons internes (non représentées) parallèles aux flasques 18 et 29 et déterminant une fente 46.

Le boîtier 35 est mis en place de manière frontale en introduisant les flasques 17-28 et 18-29 entre les cloisons internes, jusqu'à ce que le trou 40 de la face latérale 41 et le trou (non visible) de la face latérale opposée soient tous deux alignés avec les trous 19, 30, 33 et avec le trou (non visible) du flasque 18.

On engage alors une broche 50 qui constitue un axe de pivotement et que l'on protège d'une extraction frauduleuse par exemple en donnant à la broche 50 une longueur un peu inférieure à ce qu'elle devrait être et en plaçant dans le trou 40 incomplètement occupé de la soudure que l'on ponce avant de recouvrir le boîtier 35, notamment avec de la peinture. On peut aussi prévoir une broche 50 munie d'une extrémité arrondie qui complique son extraction avec des outils courants.

L'extrémité 51 de la broche 50 que l'on engage dans les trous alignés est tronconique et coopère avec le trou invisible de la face latérale du boîtier 35 opposée à la face 41, trou qui peut être borgne, c'est-à-dire qu'il ne débouche pas à l'extérieur, ou d'un diamètre compris entre les deux diamètres extrêmes de l'extrémité 51.

L'embase 36, analogue à l'embase 10, reçoit le moyeu 55 rigide, pourvu d'une couronne interne 56 pour six trous lisses 57 (trois seulement sont visibles sur le dessin) et d'une couronne externe 58 pour douze trous taraudés 59.

Le moyeu rigide 55 est fixé à l'embase 36 au moyen de vis en prise avec les trous 38.

Le volant 2 est fixé au moyeu 55 par douze vis engagées dans les trous 59 de la couronne externe 58. Ceci n'est qu'un exemple parmi d'autres, l'important étant que l'on fixe un volant standard par des moyens standards grâce à la présence de l'embase 36 qui reproduit l'embase d'origine 10. Comme on l'a dit plus haut, le volant standard n'est pas nécessairement le volant d'origine et, dans ce cas, on prévoit des pièces d'adaptation D-E-F sur la colonne de direction d'origine A.

Le moyeu 55 peut être différent de celui d'origine; il peut notamment être moins haut pour ne pas modifier la position exacte du volant 2 malgré les surépaisseurs des pièces 13, 26 et 36. On peut, ainsi, utiliser des moyeux 55 de différentes hauteurs selon les modèles de voitures et/ou de volants, afin que le dispositif conforme à l'invention puisse être adapté à tous les cas rencontrés dans la pratique.

Il est avantageux que le moyeu 55 soit conçu de telle manière qu'il puisse se déformer, bien que rigide, pour encaisser les efforts violents dus à une collision. Il peut être réalisé en tôle emboutie qui résiste parfaitement aux efforts normaux de la conduite et qui est susceptible de s'écraser dans le sens longitudinal pour absorber les contraintes que la colonne de direction A transmet au thorax du conducteur par le volant 2 en cas de décélération brutale, en particulier lors d'un choc frontal du véhicule.

Lorsque tous les éléments de structure qui viennent d'être décrits sont montés, le dispositif se présente, de profil, soit comme sur la figure 3, soit comme sur la figure 4.

On comprend, maintenant, qu'en manoeuvrant la serrure 43, le pène (non représenté) de celle-ci pénètre dans les trous 20-31 quand le volant 2 est mis en position de conduite (figures 1 et 3) et dans les trous 21-32 quand le volant 2 est mis en position antivol (figures 2 et 4), l'ensemble mobile qui porte le volant 2 pivotant autour de l'axe formé par la broche 50.

Avec ces dispositions, le volant 2 est maintenu bloqué dans chacune de ses deux positions extrêmes : position de conduite normale et position antivol.

En théorie, rien n'oblige à prévoir un blocage positif en position antivol et il semble que l'on pourrait se contenter d'une seule position de blocage à clef : position de conduite. Cependant, dans la pratique, on peut craindre qu'un voleur puisse, avec prudence certes, conduire la voiture en tenant le volant relevé. Il est donc plus sûr de prévoir un blocage aussi dans la position antivol.

Quant à la position de conduite, il est clair que le blocage doit être rigoureusement sûr car en aucune circonstance, on ne peut accepter la moindre probabilité où le volant 2 deviendrait instable.

Il est donc bon de prévoir une double sécurité comprenant un moyen de blocage automatique en position de conduite du volant 2, afin que même un oubli de fermeture de la serrure 43 par le conducteur n'occasionne un risque de désolidarisation du volant quand la voiture roule.

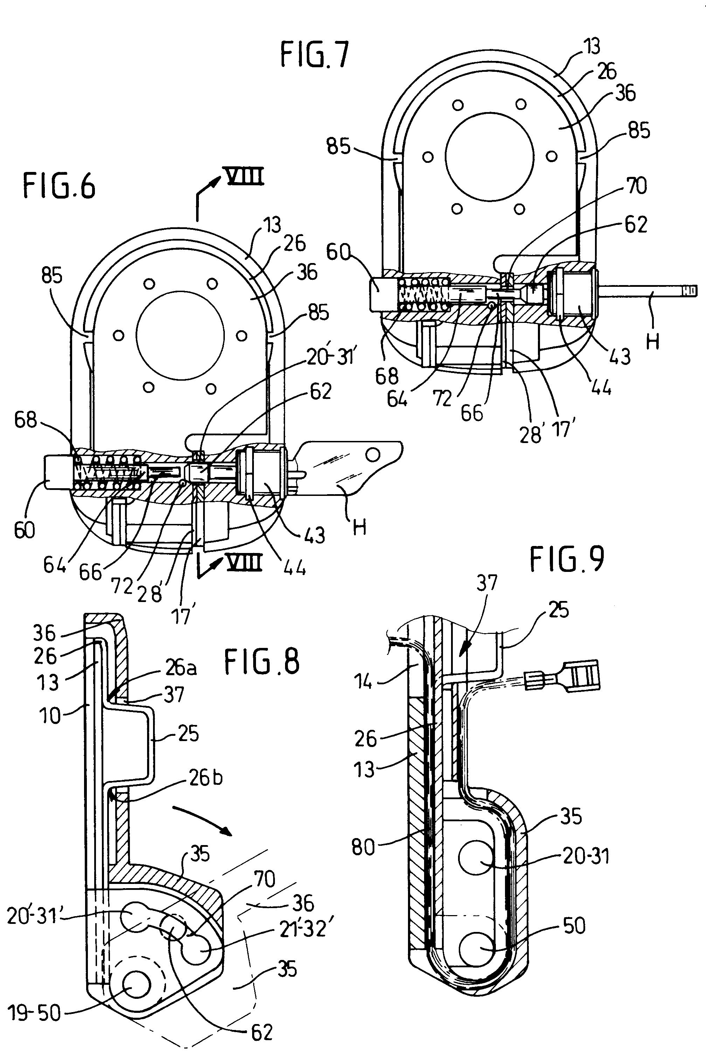

Une variante de réalisation comportant une double sécurité est schématisée partiellement sur les figures 6, 7 et 8. Sur ces figures, la position de la serrure 43 a été inversée et celle-ci se trouve maintenant sur la droite lorsque l'on regarde de face le boîtier 35 ; ceci correspond d'ailleurs à la situation la plus couramment rencontrée dans la pratique. Selon cette forme de réalisation, le dispositif comprend, outre la serrure 43 servant à verrouiller le volant dans l'une ou l'autre de ses positions, un bouton-poussoir 60 placé sur le boîtier 35 à l'opposé de la serrure 43 et dans l'axe du pène 62. Ce bouton-poussoir 60 est destiné à agir sur une tige 64 dont la partie d'extrémité 66, située du coté du pène 62, possède un diamètre inférieur à celui dudit pène 62. La tige 64 se trouve dans l'axe du pène 62 de la serrure 43. Le bouton-poussoir 60 est par ailleurs rappelé en position par un ressort 68 coaxial à la tige 64. On prévoit en outre, une lumière 70 en arc de cercle centré sur l'axe 50 entre les trous 20'-31' des flasques 17'-28' (analogues aux trous 20-31 des flasques 17-28 de la figure 5) et débouchant dans les trous 20'-31'. Le diamètre de la lumière 70 est inférieur à celui des trous 20'-31' et correspond à celui de la partie d'extrémité 66 de la tige 64.

Si l'on considère plus particulièrement la figure 6, le dispositif se trouve en position de conduite et l'on voit que le pène 62 est alors engagé dans les trous 20'-31'. Lorsque l'utilisateur veut déverrouiller le dispositif pour passer en position antivol, il doit en même temps tourner la clef H dans la serrure 43 et appuyer sur le bouton-poussoir 60 qui déplace la tige 64 vers le pène 62 et pousse celui-ci en dehors des trous 20'-31'. La partie d'extrémité 66 de la tige 64 se trouve alors en face de la lumière 70. Son diamètre, inférieur à celui du pène 62, étant adapté à celui de la lumière 70, l'utilisateur peut ensuite basculer la partie mobile du dispositif supportant le volant vers la position antivol.

La figure 7 illustre le dispositif dans une position intermédiaire entre la position de conduite (figure 6) et la position antivol, dans laquelle la partie 66 se trouve dans la lumière 70. Sur la figure 8, on a également schématisé en pointillés le pène 62. On comprend ainsi que, si l'on n'appuie pas sur le bouton-poussoir 60, le basculement de la partie mobile n'est pas possible puisque le diamètre du pène 62 est supérieur à celui de la lumière 70.

Lorsque la partie 66 de la tige 64 arrive dans le trou 21'-32' (analogue aux trous 21-32 de la figure 5), l'utilisateur peut relâcher le bouton-poussoir 60. Le pène 62 peut alors s'engager dans les trous 21'-32' puisque les diamètres correspondent et vient prendre appui sur une butée 72. L'utilisateur verrouille ensuite le dispositif dans cette position antivol évoquée en pointillés sur la figure 8, en tournant le clef H dans la serrure 43.

D'une manière similaire, pour repasser en position de conduite, l'utilisateur doit appuyer sur le bouton-poussoir 60 en même temps qu'il tourne la clef H dans la serrure 43.

Pour éviter toute erreur de positionnement en position antivol, il est avantageux de prévoir une butée qui détermine aussi exactement que possible la position dans laquelle la manoeuvre de la serrure 43 assurera le blocage du volant 2.

On remarque que le dispositif conforme à l'invention est avant tout dissuasif mais assure aussi une protection efficace contre le vol car même en cas de destruction du dispositif, celui-ci empêche quand même le vol. En effet, le volant 2 utilisé n'est pas directement adaptable sur l'embase 10 et il faudrait que le voleur qui aurait détruit toutes les protections sans dégâts gênants, apporte un volant d'origine et on rappelle qu'il existe, en France seulement, environ 260 modèles de volants et de systèmes d'adaptation.

En revanche, le dispositif permet d'utiliser un seul et même volant soit directement sur l'embase 10 d'origine, soit après retrait de l'embase 10, sur l'embase 36 du dispositif.

Pour une protection encore plus efficace et afin d'écarter au maximum toute possibilité de contourner le mécanisme antivol mis en place, on peut prévoir un point de pliure ou de cassure privilégiée situé de manière judicieuse sur le cache 26, c'est-à-dire en un endroit laissant le moins accessible possible l'extrémité de la colonne de direction A ou l'écrou F vissé sur l'extrémité filetée C de la colonne de direction A au travers du manchon D.

On rappelle que le dispositif antivol selon l'invention est tel que même si l'on dévisse la vis 27, on ne peut enlever le cache 26 du fait de son maintien en position fixe au niveau du flasque 28 dans le boîtier 35 grâce à la serrure 43. Comme indiqué sur la figure 8, le point privilégié se situe avantageusement en 26a car, même si un voleur arrive à effectuer un premier pliage ou une cassure en ce point, il n'a plus de possibilité d'arracher complètement le cache 26, même avec des moyens puissants. En effet, il ne peut engager une clef plate sous la partie restante du cache 26 puisque celle-ci est encore solidement maintenue à sa base dans le boîtier 35. En outre, la différence de diamètre entre l'écrou F et le cache 26 est prévue de sorte qu'elle soit trop petite pour pouvoir introduire un outil qui permettrait de faire à nouveau levier.

On aurait pu penser que le point de cassure privilégiée le plus judicieux était en 26b mais, contrairement à ce qu'on pourrait supposer, cette zone consititue déjà une zone de faiblesse en raison de la forme du cache 26 ; aussi, après une première cassure en ce point, cela laisserait un second point d'application permettant d'extraire totalement le cache.

Lorsque le volant 2 est en position antivol, c'est-à-dire pratiquement horizontal, il empêche tout pivotement, compte tenu de la gêne occasionnée par les commandes : clignotants, essuie-glace, tableau de bord 1, etc.

Selon les modèles de véhicules, certaines commandes pourvues d'une alimentation électrique sont situées directement sur le volant tel que par exemple l'avertisseur sonore. Comme on peut le voir sur la figure 9, le dispositif antivol selon l'invention permet le passage d'un fil électrique lorsque cela est nécessaire. Ainsi, le fil 80 peut entrer dans le dispositif par le passage central 14 puis contourner par l'extérieur l'axe défini par la broche 50 après passage entre les pièces 13 et 26 et ressortir au niveau du volant 2 par le passage central 37 et le moyeu 55. On peut remarquer que ce positionnement particulier du fil 80 contournant l'axe de basculement du dipositif ne gêne en rien le passage de la position de conduite à la position antivol et réciproquement, et ce sans qu'il soit nécessaire de prévoir une longueur supérieure à la distance parcourue ; de par son positionnement, le fil ne subit aucune élongation au cours du basculement vers la position antivol. En outre, cette alimentation électrique ne peut être arrachée ou sectionnée car elle est enserrée entre deux pièces 13 et 26 qu'on ne peut désolidariser comme expliqué précédemment. Par ailleurs, même dans le cas où l'on prévoit un point de cassure privilégiée, la cassure du cache 26 ne donne pas non plus accès au fil d'alimentation électrique puisque la cassure a lieu en un point 26a situé au dessus du passage du fil 80.

Enfin, on peut prévoir à l'intérieur de la pièce 36 des guides par exemple sous forme d'encoches 85 représentées sur les figures 6 et 7, pour prévenir un éventuel décentrage de la partie pivotante du dispositif qui pourrait se produire après un certain nombre de passages de la position de conduite à la position antivol et réciproquement.

## Revendications

**1/** Dispositif antivol pour les véhicules qui comprennent un mécanisme de direction composé d'une colonne et d'un élément de commande tel qu'un volant, un guidon et analogue, du type selon lequel l'élément de commande (2) est monté pivotant sur la colonne de direction (A) selon un axe perpendiculaire à celui de ladite colonne afin de permettre le pivotement dudit élément de commande (2) vers une position dite "antivol" où il est inapte à son usage normal tout en étant maintenu solidaire de la colonne de direction (A), des moyens (20-31-43) étant prévus pour le blocage de l'élément de commande (2) dans une position dite "de conduite" où il se trouve dans l'axe de la colonne de direction (A) et apte à son usage normal, caractérisé en ce que l'élément de commande (2) et la colonne de direction (A) sont solidaires de pièces articulées entre elles, les pièces (13 et 26) solidaires de la colonne de direction (A) comprenant un cache (25) qui dissimule l'extrémité de la colonne de direction (A) afin d'en interdire l'accès quand l'élément de commande (2) est en position antivol.

**2/** Dispositif selon la revendication 1, caractérisé en ce que le cache (25) est assujetti et immobilisé en position par des moyens (28-29) inaccessibles lorsque l'élément de commande (2) est en position antivol.

**3/** Dispositif selon la revendication 1, caractérisé en ce qu'un point de cassure privilégiée (26a) est prévu sur la pièce (26) comprenant le cache (25) dans une zone telle que l'extrémité de la colonne de direction (A) soit inaccessible même après cassure audit point.

**4/** Dispositif selon la revendication 1, caractérisé en ce que l'élément de commande (2) est assujetti au dispositif par un moyeu (55) rigide mais susceptible de se déformer en cas de choc axial.

**5/** Dispositif selon la revendication 1, caractérisé en ce qu'il comporte des moyens de blocage et de préférence des moyens de verrouillage (21-32-43) de l'élément de commande (2) dans la position antivol.

**6/** Dispositif selon la revendication 1, caractérisé en ce qu'il comprend des moyens de verrouillage qui consistent en une serrure (43) commandée par une clef amovible.

**7/** Dispositif selon la revendication 6, caractérisé en ce que la distance angulaire entre la position de conduite et la position antivol de l'élément de commande (2), est suffisamment importante pour qu'il bute nécessairement contre un élément fixe de la cabine du véhicule et/ou le conducteur lorsque ledit élément de commande (2) est manipulé alors qu'il est verrouillé en position antivol.

**8/** Dispositif selon la revendication 1, caractérisé en ce qu'il comprend une pièce (10) qui doit être fixée à l'extrémité de la colonne de direction (A), à la place de l'élément de commande d'origine et qui comporte un support (13-17-18) traversé d'au moins un passage (19) perpendiculaire à l'axe de la colonne de direction (A) pour recevoir une pièce (36) montée pivotante et présentant des moyens de fixation (38) identiques à ceux de la pièce (10) afin de recevoir un élément de commande (2) qui se substitue à l'élément de commande d'origine.

**9/** Dispositif selon la revendication 8, caractérisé en ce que le support (17) est traversé de deux passages parallèles (19 et 20), l'un (19) devant recevoir un axe de pivotement (50) et l'autre (20) devant recevoir un pène (62) appartenant à une serrure (43), afin de bloquer et de verrouiller en position de conduite l'élément de commande (2) et les pièces (36 et 55) qui en sont solidaires.

**10/** Dispositif selon la revendication 9, caractérisé en ce que le support (17) est en outre traversé d'un troisième passage (21) parallèle aux deux précédents (19 et 20) et devant recevoir un pène (62) appartenant à une serrure (43), afin de bloquer et de verrouiller en position antivol l'élément de commande (2) et les pièces (36 et 55) qui en sont solidaires.

**11/** Dispositif selon les revendications 9 et 10, caractérisé en ce que le pène ( 62 ) est lui-même monté mobile afin de pouvoir être mis en regard, sélectivement, du passage (20) pour le blocage de l'élément de commande (2) en position de conduite ou du passage (21) pour le blocage de l'élément de commande (2) en position antivol.

**12/** Dispositif selon la revendication 10, caractérisé en ce que le support (13-26) et la partie pivotante (36-55) sont munis d'au moins un passage destiné à recevoir un fil d'alimentation électrique (80), celui-ci devant contourner par l'extérieur l'axe de pivotement (50) et devant être inaccessible en position antivol.

**13/** Dispositif selon la revendication 10, caractérisé en ce qu'il comprend d'une part, un bouton-poussoir (60) situé sur la partie pivotante (36-55) dans l'axe du pène (62) et destiné à agir sur une tige (64) également située dans l'axe du pène (62) et dont une partie d'extrémité (66) la plus proche du pène (62) possède un diamètre inférieur à celui dudit pène, le bouton-poussoir (60) étant rappelé dans sa position par un ressort (68) coaxial à la tige (64) et d'autre part, une lumière (70) sensiblement en arc de cercle centré sur l'axe de pivotement (50) pratiquée entre les passages (20-21) du support (17) et débouchant dans lesdits passages (20-21), le diamètre de ladite lumière (70) étant adapté à celui de la partie d'extrémité (66) de la tige (64).

**14/** Dispositif selon la revendication 13, caractérisé eb ce qu'une butée (72) est prévue pour le pène (62) de la serrure (43).
